# EUROPEAN PATENT APPLICATION

(11) **EP 4 582 923 A1**
(43) Date of publication of application: **09.07.2025**
(21) Application number: 24204821.3
(22) Date of filing: 04.10.2024
(51) Int. Cl.: G06F 3/06

(54) **DATA STORAGE METHOD AND DEVICE**

(30) Priority: 03.01.2024 CN 202410010717
(71) Applicant: Beijing Volcano Engine Technology Co., Ltd., Beijing 100190 (CN)
(72) Inventor: CHEN, Chao, Beijing, 100028 (CN); ZHU, Xiaohui, Beijing, 100028 (CN); DUAN, Shibo, Beijing, 100028 (CN); RUAN, Shuai, Beijing, 100028 (CN); ZHANG, Yang, Beijing, 100028 (CN)
(74) Representative: Dentons UK and Middle East LLP

(57) **Abstract**

The present disclosure provides a data storage method and device. The method includes: receiving a write data request transmitted by a server, where the write data request is used to request to store target data into a storage cluster, and the storage cluster is used to store and manage data to support writing and reading of the data; storing the target data into a persistent memory in a data processing unit, and dynamically recording, in a constructed index table, a data storage condition in the persistent memory, where the index table supports the server to read all or part of the target data; and sequentially reading the target data from the persistent memory and writing into the storage cluster until all the target data indicated by the write data request is written. According to the present disclosure, data storage is divided into two stages by using the persistent memory, where the first stage is to store the target data in the persistent memory, and the second stage is to take out the target data from the persistent memory and store the target data into the storage cluster, which can implement efficient storage of the target data.

## Description

### TECHNICAL FIELD

Embodiments of the present disclosure relate to the field of data storage, and in particular, to a data storage method and device.

### BACKGROUND

Currently, to store write data into a storage cluster, a data processing unit (DPU) needs to send the write data to a central node of the storage cluster over a network, and then the central node distributes the write data to different storage nodes through internal logic to complete storage of multiple replicas. After a storage node completes the storage, the storage node needs to feed back stored information to the central node, and then the central node feeds back the stored information to the data processing unit, and then the data processing unit feeds back the stored information to a server. Only after receiving the stored information can the server store the next write data. The entire storage process is lengthy and complex, resulting in a delay in storing the write data.

In summary, there is an urgent need for a method for reducing a delay in storing write data.

### SUMMARY

Embodiments of the present disclosure provide a data storage method and device, to reduce a delay in storing write data.

In a first aspect, an embodiment of the present disclosure provides a data storage method, which includes: receiving a write data request transmitted by a server, where the write data request is used to request to store target data into a storage cluster, and the storage cluster is used to store and manage data to support writing and reading of the data; storing the target data into a persistent memory in a data processing unit, and dynamically recording, in a constructed index table, a data storage condition in the persistent memory, where the index table supports the server to read all or part of the target data; and sequentially reading the target data from the persistent memory and writing into the storage cluster until all the target data indicated by the write data request is written.

In a second aspect, an embodiment of the present disclosure provides a data storage device, including:
a receiving unit, configured to receive a write data request transmitted by a server, where the write data request is used to request to store target data into a storage cluster, and the storage cluster is used to store and manage data to support writing and reading of the data;
a storing unit, configured to store the target data into a persistent memory in a data processing unit, and dynamically record, in a constructed index table, a data storage condition in the persistent memory, where the index table supports the server to read all or part of the target data; and
a reading unit, configured to sequentially read the target data from the persistent memory and write into the storage cluster until all the target data indicated by the write data request is written.

In a third aspect, an embodiment of the present disclosure provides an electronic device, including: at least one processor and a memory;
the memory storing a computer-executable instruction; and
the at least one processor executing the computer-executable instruction stored in the memory, to cause the at least one processor to execute the data storage method provided in the first aspect.

In a fourth aspect, an embodiment of the present disclosure provides a computer-readable storage medium, where a computer-executable instruction is stored in the computer-readable storage medium, and when a processor executes the computer-executable instruction, the data storage method provided in the first aspect is implemented.

In a fifth aspect, according to one or more embodiments of the present disclosure, a computer program product is provided, where the computer program product includes a computer-executable instruction, and when a processor executes the computer-executable instruction, the data storage method provided in the first aspect is implemented.

According to the data storage method and device provided in the embodiments, the data storage method includes: receiving a write data request transmitted by a server, where the write data request is used to request to store target data into a storage cluster, and the storage cluster is used to store and manage data to support writing and reading of the data; storing the target data into a persistent memory in a data processing unit, and dynamically recording, in a constructed index table, a data storage condition in the persistent memory, where the index table supports the server to read all or part of the target data; and sequentially reading the target data from the persistent memory and writing into the storage cluster until all the target data indicated by the write data request is written. According to the present disclosure, data storage is divided into two stages by using the persistent memory, where the first stage is to store the target data in the persistent memory, and the second stage is to take out the target data from the persistent memory and store into the storage cluster, which can implement efficient storage of the target data.

### BRIEF DESCRIPTION OF DRAWINGS

In order to more clearly describe the technical solutions in the embodiments of the present disclosure or the prior art, the following briefly introduces the accompanying drawings required for describing the embodiments or the prior art. Apparently, the accompanying drawings in the following description show some embodiments of the present disclosure, and a person of ordinary skill in the art may still derive other drawings from these accompanying drawings without creative efforts.
FIG. 1 is a schematic diagram of storing data according to related art.
FIG. 2 is a schematic diagram of storing data according to an embodiment of the present disclosure.
FIG. 3 is a flowchart of steps of a data storage method according to an embodiment of the present disclosure.
FIG. 4 is a flowchart of steps of another data storage method according to an embodiment of the present disclosure.
FIG. 5 is a schematic diagram of a structure of a persistent memory according to an embodiment of the present disclosure.
FIG. 6 is a block diagram of a structure of a data storage device according to an embodiment of the present disclosure.
FIG. 7 is a schematic diagram of a hardware structure of an electronic device according to an embodiment of the present disclosure.

### DESCRIPTION OF EMBODIMENTS

To make the objectives, technical solutions, and advantages of the embodiments of the present disclosure clearer, the following clearly and completely describes the technical solutions in the embodiments of the present disclosure with reference to the accompanying drawings in the embodiments of the present disclosure. Apparently, the described embodiments are some but not all of the embodiments of the present disclosure. All other embodiments obtained by a person of ordinary skill in the art based on the embodiments of the present disclosure without creative efforts shall fall within the protection scope of the present disclosure.

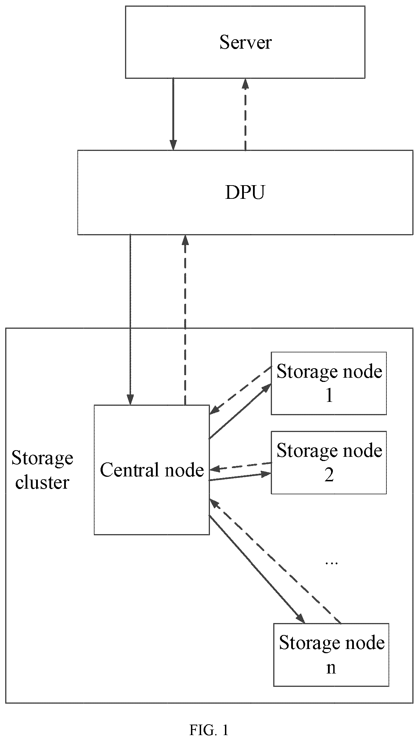

In related art, data is stored in a manner shown in FIG. 1, referring to FIG. 1, including a server, a DPU, and a storage cluster. The storage cluster may include at least one central node and N storage nodes, and N is a positive integer. When the server stores data, a solid line in the figure is a path for storing target data, and a dotted line is a path for returning feedback information after the data is stored. A sum of the two paths is a whole path for completing storage of one piece of data. When there is a plurality of pieces of data, only after a previous piece of data completes the whole path can the next piece of data continue to be stored. It can be learned that for this storage manner, some factors that affect a delay need to be considered, such as stability of a network environment between the DPU and the storage cluster, execution efficiency of a plurality of storage nodes inside the storage cluster, and a delay introduced by an internal network environment of the storage cluster. In addition, a series of tasks, such as data recovery, data compression, EC encoding, multi-node requests, and data balancing, of the storage cluster lead to contention for resources when write data, including but not limited to: CPU resources, network bandwidth resources, and data disk SSD resources. All these impact factors may result in a storage delay.

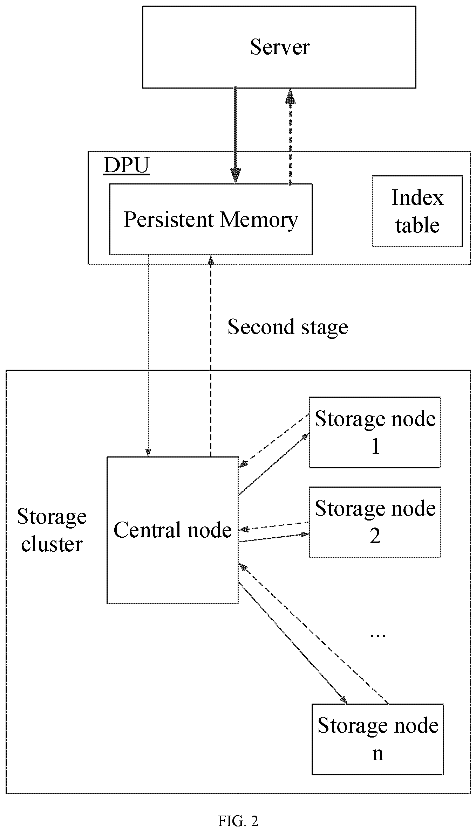

Based on the foregoing problems, the data storage method provided in the present disclosure divides storage of target data into two stages in a manner shown in FIG. 2. In the first stage, the target data is first stored into a persistent memory (PMEM) of a DPU, and then the DPU returns stored information to the server. In the second stage, the target data is obtained from the persistent memory and stored into the storage cluster. The two stages are performed in parallel. Therefore, when there are a plurality of pieces of target data, storage efficiency in writing data can be improved, and a storage delay is reduced.

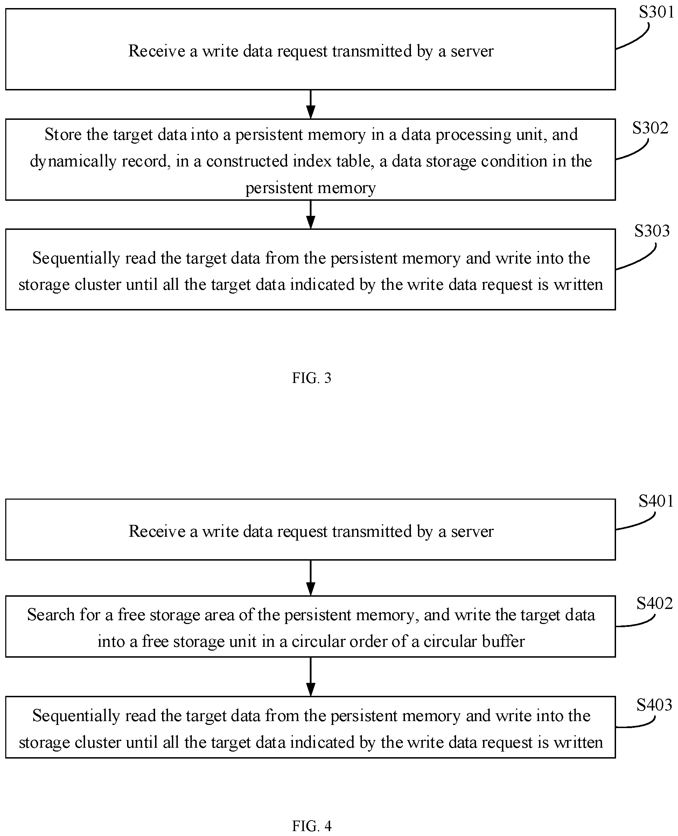

Refer to FIG. 3, which is a schematic flowchart of a data storage method according to an embodiment of the present disclosure. The data storage method is applied to the data processing unit shown in FIG. 2. The data storage method specifically includes the following steps:
S301, receive a write data request sent by a server.

The write data request is used to request to store target data into a storage cluster, and the storage cluster is used to store and manage data to support writing and reading of the data.

In this embodiment of the present disclosure, the target data is data that is an integer multiple of 4 KB. The target data includes: metadata and a data part.

The server needs to store a plurality of pieces of target data, and the target data may be one of the plurality of pieces of target data.

Further, the data processing unit may implement storage offloading, that is, a bare metal server or a virtual machine server does not need to have a local disk on the server, and all interactions with a cloud disk (namely, the storage cluster) are all transferred to the data processing unit for completion.

S302, store the target data into a persistent memory in a data processing unit, and dynamically record, in a constructed index table, a data storage condition in the persistent memory.

The index table supports the server to read all or part of the target data.

In the present disclosure, an index table is set in the data processing unit. When the index table is initially constructed, any one of a red-black tree, a trie, and a key-value pair is selected as a table structure to construct the index table.

In addition, the index table may also be other commonly used key-value indexing method. The key may be an identifier of write data, and the value may be a storage location of the write data.

The index table may be used to satisfy a read request of the server for data in the persistent memory that may occur. When a delay in the second stage is higher than a delay in the first stage, there may be a backlog of write data in the persistent memory in a short time. In this case, the server may read the write data in the persistent memory to alleviate the backlog.

In this embodiment of the present disclosure, the persistent memory is a solid-state high-performance byte-addressable memory device residing on a memory bus. The persistent memory is located on a memory bus, and supports accessing data like a dynamic random-access memory (DRAM). The persistent memory has a speed and a delay comparable to those of the DRAM, and has non-volatility of NAND (a type of flash memory).

In this embodiment of the present disclosure, S301 to S302 complete the first-stage transmission of the target data.

S303, sequentially read the target data from the persistent memory and write into the storage cluster until all the target data indicated by the write data request is written.

Before S303, the method further includes: feeding back stored information of the target data to the server, where the stored information is used to indicate to the server to transmit next write data to the data processing unit.

After the target data is stored in the persistent memory, it may be considered that the target data is stored, and then the stored information of the target data may be fed back to the server, so that the server may transmit the next target data to the data processing unit. The server does not need to wait until the target data is stored into the storage cluster and then transmit the next target data. In this way, storage efficiency of data on a server side can be improved.

Further, the target data may then be written into the storage cluster to complete the second stage of the target data.

In addition, referring to FIG. 3, after the target data is sent to the storage cluster for storage based on MAC and over a network, feedback information returned by the storage cluster over the network may be received, and the feedback information is used to indicate that the target data is written into the storage cluster. Then, the data processing unit may modify a state of the target data in the persistent memory.

In an embodiment, the target data written into the storage cluster may also be deleted in the persistent memory to release storage space of the persistent memory.

In the present disclosure, a write data path is divided into a "two-stage write solution"by storing on a DPU side: a lengthy and complex (with various contentions and instabilities) write data path for interacting with a cluster is shielded from a host side, and is managed and hosted and completed by the DPU in the "second stage".

FIG. 4 is a schematic flowchart of another data storage method according to an embodiment of the present disclosure. As shown in FIG. 4, the data storage method specifically includes the following steps:

S401, receive a write data request transmitted by a server.

For an implementation process of this step, refer to S301, and details are not described herein again.

S402, search for a free storage area of the persistent memory, and write the target data into a free storage unit in a circular order of a circular buffer.

The persistent memory uses a first-in-first-out circular buffer structure. The persistent memory includes a plurality of storage units, and the target data is written into a free storage unit.

Specifically, the persistent memory includes a plurality of sequentially connected storage units, each storage unit includes a metadata header area and a data body area, the metadata header area is used to store metadata of the target data, and the data body area is used to store the target data. In addition, the metadata header area further includes a metadata mark bit, and the metadata mark bit is used to dynamically mark a data storage state.

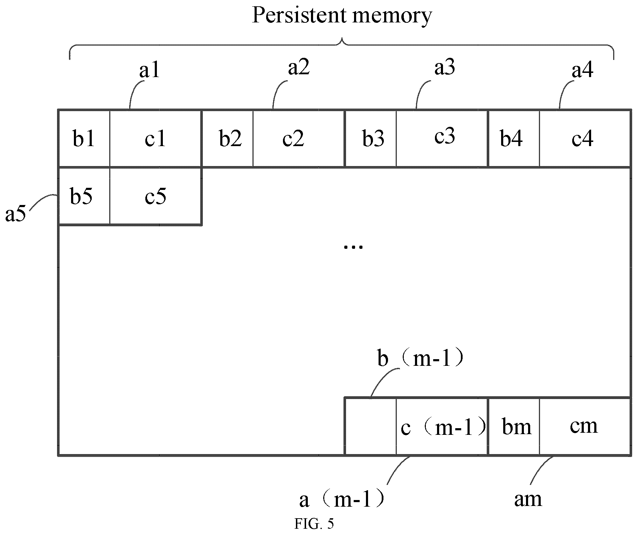

Referring to FIG. 5, the persistent memory includes m storage units (a1 to am), m is a positive integer, and a storage unit ai (i is 1 to m) includes: a metadata header area bi and a data body area ci.

In the present disclosure, a write data storage order may be sequentially from a1, a2,..., and am. Then a write data reading order may also be sequentially from a1, a2,..., and am.

For example, if all the storage units in the persistent memory are in an idle state, a first piece of target data is stored in the storage unit a1, a second piece of target data is stored in the storage unit a2, and an mth piece of target data is stored in the storage unit am. During this period, the first piece of target data in the storage unit a1 to an xth piece of target data in the storage unit ax (x is an integer greater than 1 and less than m) are sent to the storage cluster. Then the storage unit a1 to the storage unit ax release respective target data, and an (m+1)th piece of target data is stored in the storage unit a1, an (m+2)th piece of target data is stored in the storage unit a2, and so on, to implement circular storage of the persistent memory.

In the present disclosure, at least one byte may be reserved in the metadata header area as the metadata mark bit to dynamically mark the data storage state, specifically to record a state of the storage unit and/or the target data in the storage unit.

The metadata mark bit supports three states of data, and the three states include: a first state indicating that data is not stored in the persistent memory, a second state indicating that the data is written into the persistent memory but not written into the storage cluster, and a third state indicating that the data is written into the storage cluster. For example, the first state is represented by 0, and that the data is not stored in the persistent memory indicates that the storage unit is in an idle state. The second state is represented by 1, and that the data is written into the persistent memory but not written into the storage cluster indicates that the corresponding storage unit has target data stored therein, but the target data is not stored in the storage cluster. The third state is represented by 2, and that the data is written into the storage cluster indicates that the corresponding storage unit has target data stored therein, and the target data is stored in the storage cluster.

In this embodiment of the present disclosure, the method further includes: after it is determined that the metadata mark bit is the third state, deleting the target data in the storage unit where the metadata mark bit is located, to release the storage unit.

Further, in the present disclosure, the target data is written into the free storage unit in the circular order of the circular buffer. For example, referring to FIG. 5, if a storage unit ay (y is an integer greater than 1 and less than m) stores target data, and each storage unit az (z is an integer greater than y) after ay does not store target data, the target data may be stored in a storage unit a(y+1).

In the embodiment of the present disclosure, if the target data is written into the free storage unit, the metadata mark bit of the free storage unit is changed from the first state to the second state, where the first state indicates that the target storage unit is in an idle state, and the second state indicates that a target data body area has stored the target data, but the target data is not stored in the storage cluster.

S403, sequentially read the target data from the persistent memory and write into the storage cluster until all the target data indicated by the write data request is written.

For example, referring to FIG. 5, if the target data is stored in the storage unit ay, after target data in each storage unit ap (p is less than y) before the storage unit ay is sent to and stored in the storage cluster, the target data is obtained from the storage unit ay and sent to the storage cluster for storage.

Further, if the target data in one of the storage units is stored in the storage cluster, the metadata mark bit of the storage unit is updated from the second state to the third state. The third state indicates that the target data in the storage unit is stored in the storage cluster.

In this embodiment of the present disclosure, when the data processing unit is powered off and restarted, the data storage method further includes: obtaining a metadata mark bit of a storage unit in the persistent memory; and if the metadata mark bit is marked as the second state, continuing to read target data from the storage unit and write into the storage cluster.

The persistent memory has a persistent feature, and can ensure that data is not lost and interaction with the storage cluster continues to be completed when the server is powered off or the data processing unit is powered off and restarted.

After the power-off and restart, the metadata mark bit of each storage unit may be read. If the metadata mark bit is marked as the second state, the target data continues to be read from the storage unit and written into the storage cluster in the circular order of the circular buffer until all the target data indicated by the write data request is written.

Further, storing the target data in the persistent memory in the data processing unit is performed when a write throughput supported by the server is less than a preset threshold.

The solution of the present disclosure is used only when the write throughput supported by the server is less than the preset threshold. Otherwise, the solution shown in FIG. 1 may be used. The preset threshold is preset based on a size of the persistent memory.

In addition, the persistent memory has a feature of byte-addressability and a low delay at a ns level, and can greatly reduce a write delay.

Further, if the first stage ends, that is, the server no longer writes the target data into the persistent memory, the second stage may proceed, that is, data in the persistent memory is written into the storage cluster within a specified time until all the data in the persistent memory is written into the storage cluster. The specified time may be estimated based on the size of the persistent memory and a write delay in the second stage, and the present disclosure is not limited to a specific estimation method.

Specifically, if the server immediately closes a cloud disk (the cloud disk includes a process of sending the target data from the server to the DPU and then sending the target data from the DPU to the storage cluster), the closing of the cloud disk also includes two stages. In one stage, the server may implement quick closing of the cloud disk, that is, the cloud disk is closed from the server side. From a perspective of the DPU, it means that "first-stage writing" has exited, and the closing of the "first-stage writing" is completed. In the other stage, after the server shuts down and closes the cloud disk, the data processing unit continuously performs "second-stage writing" until data corresponding to the persistent memory is all written into the storage cluster, and the data processing unit executes the operation of closing of the cloud disk in the second stage.

In addition, for each cloud disk that uses the persistent memory, the data processing unit may maintain a variable, such as "data_in_pmem_count". The data processing unit periodically synchronizes a value (count) in the variable "data_in_pmem_count" to the storage cluster (a management and control node therein). For example, if the value is nonzero, it indicates that the cloud disk is still in use. If the value is 0, it indicates that the cloud disk is closed.

In another embodiment, if the cloud disk needs to be closed on a current server and then opened on a new server, then, when the cloud disk is opened on the new server, following optional support solutions are performed on the storage cluster side. One solution is that the storage cluster blocks a request of the new server to open the cloud disk until the data processing unit closes the cloud disk for the "second stage" corresponding to the old server. The other solution is that the storage cluster side supports the new server to directly open the cloud disk, and may continue to complete writing of part of target data corresponding to the old server in the persistent memory. That is, target data of the new server in the PMEM is not yet completely synchronized to the storage cluster.

In the embodiments of the present disclosure, an "ultimate write delay" offloading solution is provided for a cloud disk of the server, to meet write data requirements in different situations. In the present application, the PMEM is embedded into the DPU, and a write data path of the "cloud disk highly sensitive to a write delay" is divided into a two-stage mode, to fully use byte-addressability and persistence features of the PMEM, to ensure that data written by the server is still accessible after the DPU is abnormally powered off and restarted. In addition, when an amount of the target data is small and the PMEM has storage units with more space, a "read buffer" solution may be further derived to reduce a read delay. Further, the present disclosure fully uses persistence and byte-addressability features of the PMEM, to provide a data recovery method used when a DPU is powered off and restarted (or a process exits and then is pulled up again). In the present application, when the server closes the cloud disk, the method of asynchronously processing the interactions with the cluster in "second-stage writing" enables an instance to immediately close the cloud disk without blocking. Further, the present disclosure, after modification, may simplify a write request data path on the server side, to provide a stable ultimate write delay experience of the cloud disk.

In the related art shown in FIG. 1, a single-path write delay of 4 KB may possibly reach 200 to 300 us; after the embodiment of the present disclosure is used, most of the delay is hidden, and an ultimate write delay can be reduced to 20 to 30 us. In addition, the delay can be closed-loop in the processing efficiency of the DPU's interconnection with the PMEM, a storage stack on the server side, and a link of the DPU, and is no longer affected by a network and the storage cluster.

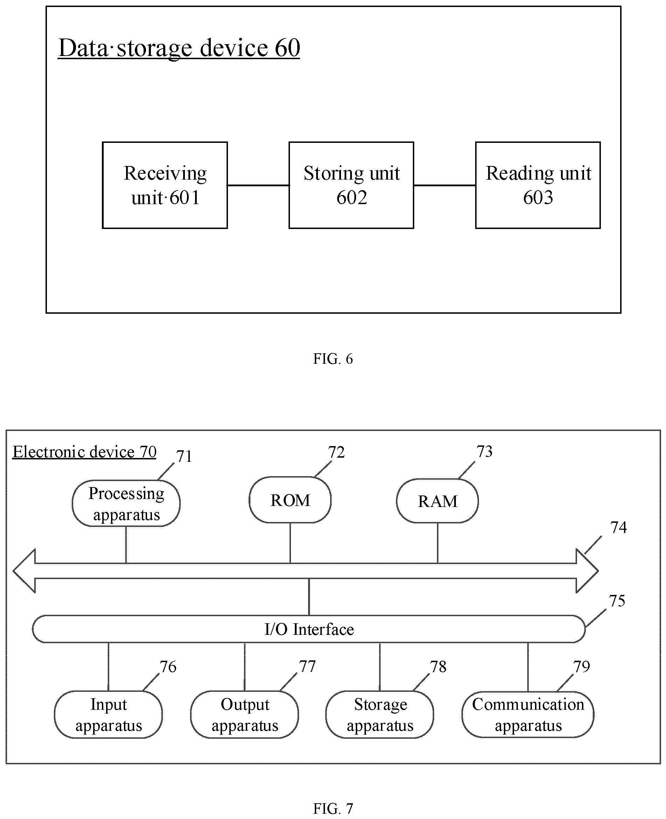

Corresponding to the data storage method in the foregoing embodiments, FIG. 6 is a block diagram of a structure of a data storage device 60 according to an embodiment of the present disclosure. For ease of description, only parts related to the embodiments of the present disclosure are shown. As shown in FIG. 6, the data storage device includes a receiving unit 601, a storing unit 602, and a reading unit 603, where
the receiving unit 601 is configured to receive a write data request transmitted by a server, where the write data request is used to request to store target data in a storage cluster, and the storage cluster is used to store and manage data to support writing and reading of the data;
the storing unit 602 is configured to store the target data into a persistent memory in a data processing unit, and dynamically record, in a constructed index table, a data storage condition in the persistent memory, where the index table supports the server to read all or part of the target data; and
the reading unit 603 is configured to sequentially read the target data from the persistent memory and write into the storage cluster until all the target data indicated by the write data request is written.

In some embodiments, the persistent memory uses a first-in-first-out circular buffer structure, and the storing unit 602 is specifically configured to: search for a free storage area of the persistent memory, and write the target data into a free storage unit in a circular order of a circular buffer.

In some embodiments, the persistent memory is a circular buffer, and a selecting unit (not shown) is further included, which is configured to select any one of a red-black tree, a trie, and a key-value pair as a table structure to construct the index table when the index table is initially constructed.

In some embodiments, storing the target data into the persistent memory in the data processing unit is performed when a write throughput supported by the server is less than a preset threshold.

In some embodiments, the persistent memory includes a plurality of sequentially connected storage units, and each storage unit includes a metadata header area and a data body area, where the metadata header area is used to store metadata, and the data body area is used to store data.

In some embodiments, the metadata header area further includes a metadata mark bit, and the metadata mark bit is used to dynamically mark a data storage state.

In some embodiments, the metadata mark bit supports three states of data, including: a first state indicating that the data is not stored in the persistent memory, a second state indicating that the data is written into the persistent memory but not written into the storage cluster, and a third state indicating that the data is written into the storage cluster.

In some embodiments, if the data processing unit is powered off and restarted, the reading unit 603 is further configured to obtain a metadata mark bit of a storage unit in the persistent memory; and if the metadata mark bit is marked as the second state, continue to read target data from the storage unit and write into the storage cluster.

The data storage device provided in the embodiments can be used to execute the technical solutions of the forgoing embodiments of the data storage method. The implementation principles and technical effects are similar, and details are not described herein again in this embodiment.

Referring to FIG. 7, FIG. 7 is a schematic diagram of a structure of an electronic device 70 suitable for implementing an embodiment of the present disclosure. The electronic device 70 may be a terminal device or a server. The terminal device may include, but is not limited to, mobile terminals such as a mobile phone, a notebook computer, a digital broadcast receiver, a personal digital assistant (PDA), a tablet computer (Portable Android Device, PAD for short), a portable multimedia player (Portable Media Player, PMP for short), and a vehicle-mounted terminal (for example, a vehicle navigation terminal), and fixed terminals such as a digital TV and a desktop computer. The electronic device shown in FIG. 7 is merely an example, and shall not impose any limitation on the function and scope of use of the embodiments of the present disclosure.

As shown in FIG. 7, the electronic device 70 may include a processing apparatus (for example, a central processing unit, a graphics processing unit, etc.) 71 that may perform a variety of appropriate actions and processing in accordance with a program stored in a read-only memory (ROM) 72 or a program loaded from a storage apparatus 78 into a random access memory (RAM) 73. The RAM 73 further stores various programs and data required for the operation of the electronic device 70. The processing apparatus 71, the ROM 72, and the RAM 73 are connected to each other through a bus 74. An input/output (I/O) interface 75 is also connected to the bus 74.

Generally, the following apparatuses may be connected to the I/O interface 75: an input apparatus 76 including, for example, a touchscreen, a touchpad, a keyboard, a mouse, a camera, a microphone, an accelerometer, and a gyroscope; an output apparatus 77 including, for example, a liquid crystal display (LCD), a speaker, and a vibrator; the storage apparatus 78 including, for example, a tape and a hard disk; and a communication apparatus 79. The communication apparatus 79 may allow the electronic device 70 to perform wireless or wired communication with other devices to exchange data. Although FIG. 7 shows the electronic device 70 having various apparatuses, it should be understood that it is not required to implement or have all of the shown apparatuses, and may alternatively implement or have more or fewer apparatuses.

In particular, according to an embodiment of the present disclosure, the process described above with reference to the flowcharts may be implemented as a computer software program. For example, this embodiment of the present disclosure includes a computer program product, which includes a computer program carried on a computer-readable medium, where the computer program includes program code for performing the method shown in the flowchart. In such an embodiment, the computer program may be downloaded from a network through the communication apparatus 79, or installed from the storage apparatus 78, or installed from the ROM 72. When the computer program is executed by the processing apparatus 71, the above-mentioned functions defined in the method of the embodiment of the present disclosure are performed.

It should be noted that the above computer-readable medium described in the present disclosure may be a computer-readable signal medium, or a computer-readable storage medium, or any combination thereof. The computer-readable storage medium may be, for example but not limited to, electric, magnetic, optical, electromagnetic, infrared, or semiconductor systems, apparatuses, or devices, or any combination thereof. A more specific example of the computer-readable storage medium may include, but is not limited to: an electrical connection having one or more wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, the computer-readable storage medium may be any tangible medium containing or storing a program that may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may also be any computer-readable medium other than the computer-readable storage medium. The computer-readable signal medium can send, propagate, or transmit a program used by or in combination with an instruction execution system, apparatus, or device. The program code contained on the computer-readable medium may be transmitted by any suitable medium, including but not limited to electric wires, optical cables, radio frequency (RF), etc., or any suitable combination thereof.

The above computer-readable medium may be contained in the above electronic device. Alternatively, the computer-readable medium may exist independently, without being assembled into the electronic device.

The foregoing computer-readable medium carries one or more programs, and when the one or more programs are executed by the electronic device, the electronic device is caused to perform the method shown in the foregoing embodiment.

Computer program code for performing operations of the present disclosure may be written in one or more programming languages or a combination thereof, where the programming languages include an object-oriented programming language such as Java, Smalltalk, and C++, and further include conventional procedural programming languages such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case involving a remote computer, the remote computer may be connected to a computer of the user over any type of network, including a local area network (LAN) or a wide area network (WAN), or may be connected to an external computer (for example, connected over the Internet using an Internet service provider).

The flowcharts and block diagrams in the accompanying drawings illustrate the possibly implemented architecture, functions, and operations of the system, method, and computer program product according to various embodiments of the present disclosure. In this regard, each block in the flowchart or block diagram may represent a unit, program segment, or part of code, and the unit, program segment, or part of code contains one or more executable instructions for implementing the specified logical functions. It should also be noted that in some alternative implementations, the functions marked in the blocks may also occur in an order different from that marked in the accompanying drawings. For example, two blocks shown in succession may actually be performed substantially in parallel, or they may sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The units involved in the descriptions in the embodiments of the present disclosure may be implemented by means of software, or may be implemented by means of hardware. The name of a unit does not constitute a limitation on the unit in some cases, for example, a first obtaining unit may also be described as "a unit for obtaining at least two Internet protocol addresses".

The functions described herein above may be performed at least partially by one or more hardware logic components. For example, without limitation, exemplary types of hardware logic components that may be used include: a field programmable gate array (FPGA), an application-specific integrated circuit (ASIC), an application-specific standard product (ASSP, Application Specific Standard Parts), a system on chip (SOC), a complex programmable logic device (CPLD), and the like.

In the context of the present disclosure, a machine-readable medium may be a tangible medium, which may contain or store a program used by or in combination with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, apparatuses, or devices, or any suitable combination thereof. A more specific example of the machine-readable storage medium may include an electrical connection based on one or more wires, a portable computer disk, a hard disk, a random access memory (RAM), a read-only memory (ROM), an erasable programmable read-only memory (EPROM, or flash memory), an optical fiber, a portable compact disk read-only memory (CD-ROM), an optical storage device, a magnetic storage device, or any suitable combination thereof.

In a first aspect, one or more embodiments of the present disclosure provide a data storage method, which includes: receiving a write data request transmitted by a server, where the write data request is used to request to store target data in a storage cluster, and the storage cluster is used to store and manage data to support writing and reading of the data; storing the target data into a persistent memory in a data processing unit, and dynamically recording, in a constructed index table, a data storage condition in the persistent memory, where the index table supports the server to read all or part of the target data; and sequentially reading the target data from the persistent memory and writing into the storage cluster until all the target data indicated by the write data request is written.

In one or more embodiments of the present disclosure, the persistent memory uses a first-in-first-out circular buffer structure, and storing the target data into the persistent memory in the data processing unit includes:
searching for a free storage area of the persistent memory, and writing the target data into a free storage unit in a circular order of a circular buffer.

In one or more embodiments of the present disclosure, the method further includes:
selecting any one of a red-black tree, a trie, and a key-value pair as a table structure to construct the index table when the index table is initially constructed.

In one or more embodiments of the present disclosure, storing the target data into the persistent memory in the data processing unit is performed when a write throughput supported by the server is less than a preset threshold.

In one or more embodiments of the present disclosure, the persistent memory includes a plurality of sequentially connected storage units, and each storage unit includes a metadata header area and a data body area, where the metadata header area is used to store metadata, and the data body area is used to store data.

In one or more embodiments of the present disclosure, the metadata header area further includes a metadata mark bit, and the metadata mark bit is used to dynamically mark a data storage state.

In one or more embodiments of the present disclosure, the metadata mark bit supports three states of data, and the three states include: a first state indicating that the data is not stored in the persistent memory, a second state indicating that the data is written into the persistent memory but not written into the storage cluster, and a third state indicating that the data is written into the storage cluster.

In one or more embodiments of the present disclosure, when the data processing unit is powered off and restarted, the data storage method further includes:
obtaining a metadata mark bit of a storage unit in the persistent memory; and
if the metadata mark bit is marked as the second state, continuing to read target data from the storage unit and write into the storage cluster.

In a second aspect, one or more embodiments of the present disclosure provide a data storage device, which includes:
a receiving unit, configured to receive a write data request transmitted by a server, where the write data request is used to request to store target data in a storage cluster, and the storage cluster is used to store and manage data to support writing and reading of the data;
a storing unit, configured to store the target data into a persistent memory in a data processing unit, and dynamically record, in a constructed index table, a data storage condition in the persistent memory, where the index table supports the server to read all or part of the target data; and
a reading unit, configured to sequentially read the target data from the persistent memory and write into the storage cluster until all the target data indicated by the write data request is written.

In a third aspect, one or more embodiments of the present disclosure provide an electronic device, which includes: at least one processor and a memory;
the memory storing a computer-executable instruction; and
the at least one processor executing the computer-executable instruction stored in the memory to cause the at least one processor to execute the data storage method provided in the first aspect.

In a fourth aspect, one or more embodiments of the present disclosure provide a computer-readable storage medium, where a computer-executable instruction is stored in the computer-readable storage medium, and when a processor executes the computer-executable instruction, the data storage method provided in the first aspect is implemented.

In a fifth aspect, one or more embodiments of the present disclosure provide a computer program product, where the computer program product includes a computer-executable instruction, and when a processor executes the computer-executable instruction, the data storage method provided in the first aspect is implemented.

The foregoing descriptions are merely preferred embodiments of the present disclosure and explanations of the applied technical principles. Persons skilled in the art should understand that the scope of disclosure involved in the present disclosure is not limited to the technical solution formed by a specific combination of the foregoing technical features, and shall also cover other technical solutions formed by any combination of the foregoing technical features or equivalent features thereof without departing from the foregoing concept of disclosure. For example, the technical solution formed by replacing the foregoing features with technical features with similar functions disclosed in the present disclosure (but not limited thereto).

In addition, although the operations are depicted in a specific order, it should be understood as requiring these operations to be performed in the specific order shown or in a sequential order. Under specific circumstances, multitasking and parallel processing may be advantageous. Similarly, although several specific implementation details are contained in the foregoing discussions, these details should not be construed as limiting the scope of the present disclosure. Some features that are described in the context of separate embodiments can also be implemented in combination in a single embodiment. In contrast, various features described in a single embodiment can also be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are merely exemplary forms of implementing the claims.

## Claims

1. A data storage method, comprising:
receiving (S301, S401) a write data request transmitted by a server, wherein the write data request is used to request to store target data into a storage cluster, and the storage cluster is used to store and manage data to support writing and reading of the data;
storing (S302) the target data into a persistent memory in a data processing unit, and dynamically recording, in a constructed index table, a data storage condition in the persistent memory, wherein the index table supports the server to read all or part of the target data; and
sequentially reading (S303, S403) the target data from the persistent memory and writing into the storage cluster until all the target data indicated by the write data request is written.

2. The data storage method according to claim 1, wherein the persistent memory uses a first-in-first-out circular buffer structure, and the storing (S302) the target data into the persistent memory in the data processing unit comprises:
searching (S402) for a free storage area of the persistent memory, and writing the target data into the free storage unit in a circular order of a circular buffer.

3. The data storage method according to claim 1, further comprising:
selecting any one of a red-black tree, a trie, and a key-value pair as a table structure to construct the index table when the index table is initially constructed.

4. The data storage method according to claim 1, wherein the storing (S302) the target data into the persistent memory in the data processing unit is performed when a write throughput supported by the server is less than a preset threshold.

5. The data storage method according to claim 1, wherein the persistent memory comprises a plurality of sequentially connected storage units, and each storage unit comprises a metadata header area and a data body area, wherein the metadata header area is used to store metadata, and the data body area is used to store data.

6. The data storage method according to claim 5, wherein the metadata header area further comprises a metadata mark bit, and the metadata mark bit is used to dynamically mark a data storage state.

7. The data storage method according to claim 6, wherein the metadata mark bit supports three states of data, and the three states comprise: a first state indicating that the data is not stored in the persistent memory, a second state indicating that the data is written into the persistent memory but not written into the storage cluster, and a third state indicating that the data is written into the storage cluster.

8. The data storage method according to claim 6, wherein when the data processing unit is powered off and restarted, the data storage method further comprises:
obtaining a metadata mark bit of a storage unit in the persistent memory; and
if the metadata mark bit is marked as the second state, continuing to read the target data from the storage unit and write into the storage cluster.

9. A data storage device (60), comprising:
a receiving unit (601), configured to receive a write data request transmitted by a server, wherein the write data request is used to request to store target data into a storage cluster, and the storage cluster is used to store and manage data to support writing and reading of the data;
a storing unit (602), configured to store the target data into a persistent memory in a data processing unit, and dynamically record, in a constructed index table, a data storage condition in the persistent memory, wherein the index table supports the server to read all or part of the target data; and
a reading unit (603), configured to sequentially read the target data from the persistent memory and write into the storage cluster until all the target data indicated by the write data request is written.

10. The data storage device (60) according to claim 9, wherein the persistent memory uses a first-in-first-out circular buffer structure, and the storing unit (602) is specifically configured to: search for a free storage area of the persistent memory, and write the target data into a free storage unit in a circular order of a circular buffer.

11. The data storage device (60) according to claim 9, wherein storing the target data into the persistent memory in the data processing unit is performed when a write throughput supported by the server is less than a preset threshold.

12. The data storage device (60) according to claim 9, wherein the persistent memory includes a plurality of sequentially connected storage units, and each storage unit includes a metadata header area and a data body area, where the metadata header area is used to store metadata, and the data body area is used to store data.

13. The data storage device (60) according to claim 12, wherein the metadata header area further comprises a metadata mark bit, and the metadata mark bit is used to dynamically mark a data storage state.

14. An electronic device (70), comprising: at least one processor and a memory;
the memory storing a computer-executable instruction; and
the at least one processor executing the computer-executable instruction stored in the memory to cause the at least one processor to execute the data storage method according to any one of claims 1 to 8.

15. A computer-readable storage medium, wherein a computer-executable instruction is stored in the computer-readable storage medium, and when a processor executes the computer-executable instruction, the data storage method according to any one of claims 1 to 8 is implemented.
